# FASCICULE DE BREVET EUROPEEN

(11) **EP 1 690 612 B1**
(45) Date de publication et mention de la délivrance du brevet: **30.05.2007**
(21) Numéro de dépôt: 06300081.4
(22) Date de dépôt: 30.01.2006
(51) Int. Cl.: B21D 53/90, B60G 21/055, B60G 21/05, B21D 41/02

(54) **Procédé permettant d'évaser par déformation chaque extrémité d'une barre tubulaire creuse, telle qu'une barre anti-dévers d'un train arrière de véhicule automobile**
Verfahren zum Aufweiten der Enden eines Hohlprofils, z. B. eines Stabilisators für eine Hinterachse eines Kraftfahrzeuges
Method for enlarging the ends of a hollow tubular profile, for example the ends of a stabilizer bar for a rear axle assembly of a motor vehicle

(30) Priorité: 10.02.2005 FR 0501331
(43) Date de publication de la demande: 16.08.2006
(73) Titulaire: Peugeot Citroen Automobiles SA, 78140 Vélizy-Villacoublay (FR)
(72) Inventeur: Courteaux, Marc, 25400 Audincourt (FR); Debrie, Jean-Jacques, 90400 Meroux (FR)
(74) Mandataire: Gendraud, Pierre

(56) Documents cités:
- EP-A- 1 238 750
- WO-A-03/004190
- DE-A1- 19 805 463
- US-A1- 2004 222 270
- PATENT ABSTRACTS OF JAPAN vol. 012, no. 262 (M-721), 22 juillet 1988 (1988-07-22) -& JP 63 046913 A (MASANOBU NAKAMURA; others: 01), 27 février 1988 (1988-02-27)

## Description

La présente invention concerne un procédé permettant d'évaser par déformation chacune des extrémités d'une barre tubulaire creuse, selon le préambule de la revendication 1 (voir par exemple WO-A-03/004190).

Elle s'applique en particulier à une barre anti-dévers d'un train arrière de suspension de véhicule automobile.

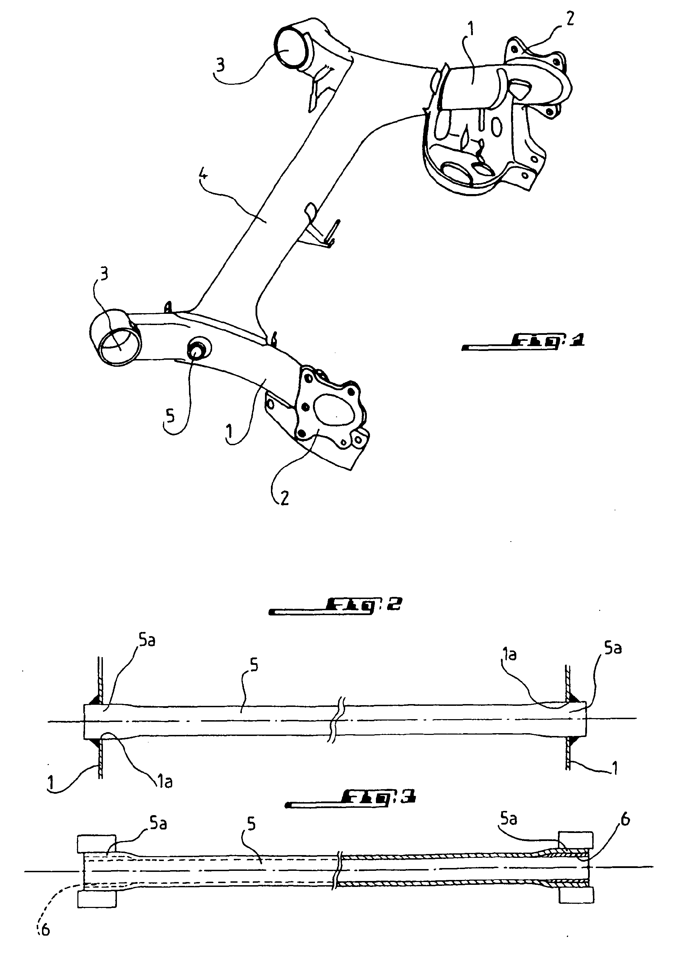

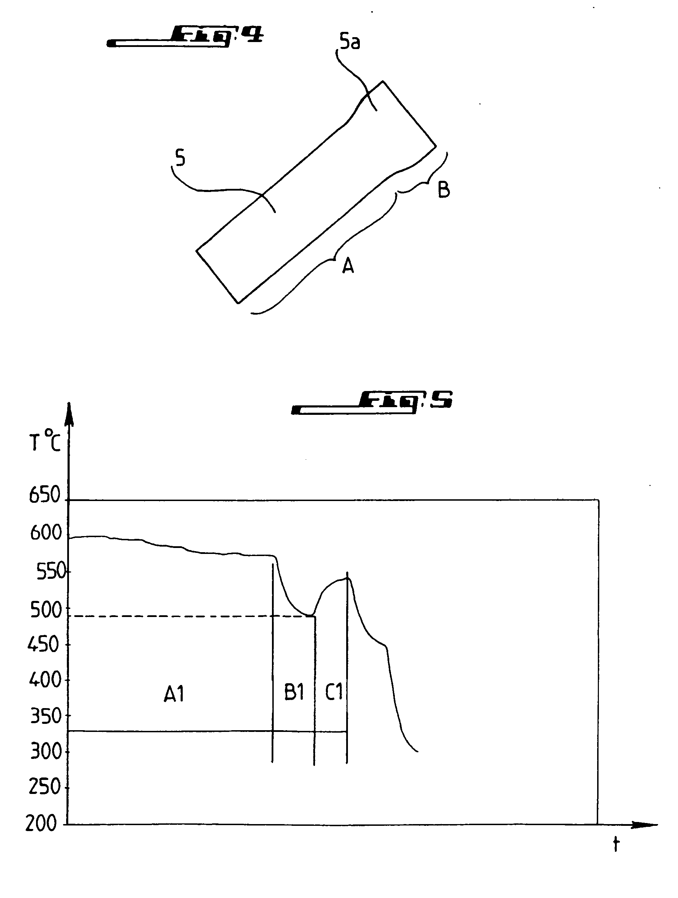

La figure 1 représente un tel train arrière selon lequel les deux bras 1 portent à l'une de leurs extrémités une porte-fusée 2 de roue arrière et ont leurs extrémités opposées 3 reliées de manière articulée au châssis (non représenté) du véhicule. Les deux bras 1 sont reliés l'un à l'autre par une traverse déformable 4 présentant en section transversale sensiblement la forme d'un U allongé et à l'intérieur de laquelle est logée une barre anti-dévers 5 représentée en figure 2. Cette figure montre que la barre anti-dévers 5 a ses deux extrémités 5a qui sont évasées et fixées par soudage dans des orifices 1a formés dans les deux bras 1 du train arrière.

La barre anti-dévers 5 est creuse et réalisée à partir de tubes étirés ou roulés soudés. Cette barre subit une déformation à chaud à une température d'environ 1000°C à ses extrémités pour obtenir la forme évasée 5a de chaque extrémité. Les caractéristiques mécaniques de cette barre pour lui permettre, par sa rigidité, de régler le comportement routier du véhicule, sont obtenues par un traitement de trempe et de revenu.

Cependant, le traitement de trempe et de revenu de telles barres anti-dévers en un matériau à base d'acier faiblement allié, tel que du type 28 Mn 6, nécessite des moyens industriels lourds et coûteux.

La présente invention propose un procédé permettant d'évaser par déformation les extrémités d'une barre tubulaire creuse supprimant le traitement thermique de trempe et de revenu après mise en forme de ces extrémités tout en conservant à la barre ses propriétés ou caractéristiques mécaniques souhaitées pour son utilisation.

A cet effet, selon l'invention, le procédé permettant d'évaser par déformation chacune des extrémités d'une barre tubulaire creuse, est caractérisé en ce qu'il consiste à prétraiter la barre tubulaire creuse pour lui conférer ses caractéristiques mécaniques souhaitées et à déformer à tiède à une température comprise entre environ 500°C et environ 550°C chaque extrémité de la barre par un outil, tel qu'un poinçon de refoulage, introduit dans cette extrémité.

Selon une caractéristique préférée, l'opération de déformation des extrémités de la barre tubulaire creuse est réalisée en une seule passe par les deux outils introduits respectivement dans les deux extrémités de ladite barre tubulaire creuse.

Selon une autre caractéristique préférée, l'opération de déformation est appliquée à l'aide d'une presse par les deux outils aux extrémités de la barre, ladite presse appliquant un effort de déformation se situant à environ 9000 Newtons.

De préférence la barre tubulaire est en acier faiblement allié, tel que 34 MB 5.

Avantageusement, la barre tubulaire a une dureté avant déformation à tiède de ses extrémités choisie dans la gamme d'environ 241 à 248 HB.

La barre tubulaire est une barre anti-dévers destinée à un train arrière de suspension pour véhicule automobile.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 représente en perspective un train arrière classique de véhicule automobile ;
- la figure 2 représente une barre anti-dévers présente dans le train arrière de la figure 1 ;
- la figure 3 représente le procédé de réalisation d'une barre anti-dévers tubulaire creuse conformément à l'invention ;
- la figure 4 représente en vue agrandie la forme évasée de l'une des extrémités de la barre anti-dévers obtenue par le procédé de l'invention ; et
- la figure 5 est un graphe représentant l'évolution en fonction du temps de la température au cours de l'opération de refoulage de chaque extrémité d'une barre anti-dévers suivant le procédé de l'invention.

L'invention va être décrite dans l'application à une barre anti-dévers d'un train arrière de suspension pour véhicule automobile, mais il est bien entendu qu'elle peut s'appliquer à tout autre type de barre tubulaire creuse.

La figure 3 représente le moyen permettant de déformer chaque extrémité de la barre anti-dévers creuse 5 dans le cadre de l'invention.

Ce moyen est constitué par deux poinçons de refoulage 6 de mise en forme respectivement des deux extrémités 5a de la barre 5 et adaptés à la forme évasée souhaitée de chaque extrémité de la barre 5.

Avant refoulage des extrémités 5a de la barre anti-dévers 5 par les poinçons 6, la barre anti-dévers a été prétraitée de manière à obtenir ses caractéristiques mécaniques souhaitées de rigidité permettant de régler le comportement routier du véhicule.

L'opération de refoulage est réalisée en une seule passe par les deux poinçons 6 introduits respectivement dans les deux extrémités ou embouts de la barre 5 au moment où cette dernière est à une température tiède d'environ 500°C à environ 550°C.

A titre d'exemple, l'opération de refoulage a été réalisée à la température de 500°C aux deux extrémités d'une barre dont la dureté se situe vers 241 HB. On a pu constater que la forme évasée de chaque extrémité a été réalisée sans difficulté et les dimensions de cette forme ont été respectées. Comme le montre la figure 4, les duretés relevées sur la barre 5 dans la zone A en dehors de la partie évasée par déformation, après mise en forme de cette dernière, se situe au voisinage de 220 à 225 HB. Cette chute de dureté observée est en fait liée au chauffage en four vers 600°C de la barre 5 comme on le verra plus loin. Par contre, l'effet d'écrouissage résultant de la modification de l'état structural du métal de la barre 5 est sensible sur la partie d'extrémité déformée (zone B) où la dureté a augmenté pour se situer vers 252 254 HB.

L'effort de refoulage appliqué à l'aide d'une presse par les deux poinçons 6 aux extrémités de la barre 5 se situe à environ 9000 Newtons.

Pour obtenir la température de forgeage, il est nécessaire de tenir compte des pertes au transfert de la barre vers la presse et les pertes par échange thermique avec l'outillage, pertes qui conduisent à chauffer la barre 5 à environ 600°C pour la forger à environ 500 - 550 °C.

La figure 5 représente justement l'évolution de la température de la barre 5 au cours de l'opération de refoulage.

La mesure thermique effectuée sur cette barre met en évidence trois zones distinctes comprenant .
- la zone A1 correspondant au transfert de la barre 5 du four dans lequel elle est portée à une température d'environ 600°C, vers la presse, le transfert s'accompagnant d'une perte thermique d'environ 30°C ;
- une zone B1 correspondant à la perte thermique d'environ 120°C due au contact de la barre 5 avec l'outillage (poinçons de refoulage 6) ; et
- une zone C1 correspondant à l'effet thermomécanique au cours de la déformation des extrémités de la barre 5 avec une élévation de température de 50°C.

Globalement, le début de l'opération de refoulage a lieu à environ 500°C et la barre 5 se déforme pour une température comprise entre environ 500°C et environ 550°C.

A titre d'autre exemple, on a pu constater que pour une barre anti-dévers 5 réalisée en acier faiblement allié, tel que 34 MB 5 et d'une dureté de 243 HB, la mise en forme de ses extrémités entre environ 500°C et environ 550°C s'est effectuée sans fissuration. Si les propriétés d'utilisation de la barre anti-devers nécessite un niveau de dureté supérieure à 243 HB, par exemple d'environ 248 HB, il faudra alors tenir compte de la perte des caractéristiques mécaniques due au réchauffage du tube avant refoulage.

En déformant à tiède les extrémités ou embouts de la barre anti-dévers, les caractéristiques mécaniques obtenues de celle-ci sont telles que l'on supprime le traitement thermique de trempe et de revenu intervenant actuellement après déformation.

## Revendications

1. Procédé permettant d'évaser par déformation chacune des extrémités (5a) d'une barre tubulaire creuse (5), **caractérisé en ce qu'**il consiste à prétraiter la barre tubulaire creuse (5) pour lui conférer ses caractéristiques mécaniques souhaitées et à déformer à tiède à une température comprise entre environ 500°C et environ 550°C chaque extrémité de la barre (5) par un outil (6), tel qu'un poinçon de refoulage, introduit dans cette extrémité (5a).

2. Procédé selon la revendication 1, **caractérisé en ce que** l'opération de déformation des extrémités (5a) de la barre tubulaire creuse (5) est réalisée en une seule passe par les deux outils (6) introduits respectivement dans les deux extrémités de ladite barre tubulaire creuse (5).

3. Procédé selon l'une quelconque des revendications précédentes, **caractérisé en ce que** l'opération de déformation est appliquée à l'aide d'une presse par les deux outils (6) aux extrémités (5a) de la barre (5), ladite presse appliquant un effort de déformation se situant à environ 9000 Newtons.

4. Procédé selon l'une quelconque des revendications précédentes, **caractérisé en ce que** la barre tubulaire (5) est en acier faiblement allié, tel que 34 MB 5.

5. Procédé selon l'une quelconque des revendications précédentes, **caractérisé en ce que** la barre tubulaire (5) a une dureté avant déformation à tiède de ses extrémités (5a) choisie dans la gamme d'environ 241 à 248 HB.

6. Procédé selon l'une quelconque des revendications précédentes, **caractérisé en ce que** la barre tubulaire (5) est une barre anti-dévers destinée à un train arrière de suspension pour véhicule automobile.

## Claims

1. Method making it possible to widen by deformation each of the ends (5a) of a hollow tubular bar (5), **characterised in that** it consists in pre-processing the hollow tubular bar (5) in order to give it its desired mechanical characteristics, and in warm-working, at a temperature comprised between approximately 500°C and approximately 550°C, each end of the bar (5) using a tool (6), such as an upsetting punch, introduced into that end (5a).

2. Method according to Claim 1, **characterised in that** the operation of deforming the ends (5a) of the hollow tubular bar (5) is carried out in a single pass by the two tools (6) introduced respectively into the two ends of said hollow tubular bar (5).

3. Method according to any one of the preceding claims, **characterised in that** the deformation operation is applied using a press by the two tools (6) at the ends (5a) of the bar (5), said press applying a deformation stress of approximately 9000 Newtons.

4. Method according to any one of the preceding claims, **characterised in that** the tubular bar (5) is made of low-alloy steel, such as 34 MB 5.

5. Method according to any one of the preceding claims, **characterised in that** the tubular bar (5) has a hardness before warm-working of its ends (5a) selected from the range of approximately 241 to 248 HB.

6. Method according to any one of the preceding claims, **characterised in that** the tubular bar (5) is an anti-roll bar intended for a rear suspension system for a motor vehicle.

## Patentansprüche

1. Verfahren zum Aufweiten durch Umformen der Enden (5a) einer hohlen rohrförmigen Stange (5), **dadurch gekennzeichnet, dass** es darin besteht, die hohle rohrförmige Stange (5) vorzubehandeln, um ihr die gewünschten mechanischen Eigenschaften zu verleihen, und jedes Ende der Stange (5) bei einer Temperatur zwischen ungefähr 500 °C und 550 °C mit einem Werkzeug (6) wie einem Stauchstempel halbwarm umzuformen, der in das Ende (5a) eingeführt wird.

2. Verfahren nach Anspruch 1; **dadurch gekennzeichnet, dass** das Umformen der Enden (5a) der hohlen rohrförmigen Stange (5) mit den beiden Werkzeugen (6), die in die beiden Enden der hohlen rohrförmigen Stange (5) eingeführt wurden, in einem Durchgang stattfindet.

3. Verfahren nach einem der vorhergehenden Ansprüche, **dadurch gekennzeichnet, dass** das Umformen mithilfe einer Presse von den beiden Werkzeugen (6) an den Enden (5a) der Stange (5) durchgeführt wird, wobei die Presse eine Umformungskraft von ungefähr 9000 Newton ausübt.

4. Verfahren nach einem der vorhergehenden Ansprüche, **dadurch gekennzeichnet, dass** die rohrförmige Stange (5) aus schwachlegiertem Stahl wie beispielsweise 34 MB 5 ist.

5. Verfahren nach einem der vorhergehenden Ansprüche, **dadurch gekennzeichnet, dass** die rohrförmige Stange (5) eine Härte vor der Halbwarm-Umformung ihrer Enden (5a) im Bereich von ungefähr 241 bis 248 HB besitzt.

6. Verfahren nach einem der vorhergehenden Ansprüche, **dadurch gekennzeichnet, dass** die rohrförmige Stange (5) ein Stabilisator für eine Hinterachse eines Kraftfahrzeugs ist.
